# EUROPÄISCHE PATENTANMELDUNG

(11) **EP 0 793 065 A2**
(43) Veröffentlichungstag der Anmeldung: **03.09.1997**
(21) Anmeldenummer: 97103372.5
(22) Anmeldetag: 28.02.1997
(51) Int. Cl.: F25B 15/04

(54) **Mehrstufige Absorbtionswärmepumpe mit Mischeinrichtung**

(30) Priorität: 01.03.1996 DE 19607893
(71) Anmelder: ZAE Bayern Bay. Zentrum für Angewandte Energieforschung E.V., 85748 Garching/Mü. (DE)
(72) Erfinder: Kahn, Roland, Dr., 86179 Angsburg (DE)
(74) Vertreter: KUHNEN, WACKER & PARTNER

(57) **Zusammenfassung**

Es wird eine mehrstufige Absorptionswärmepumpe mit einem Arbeitsstoffpaar mit mehrkomponentiger Dampfphase angegeben, die verbesserte Wärmeverhältnisse aufweist. Durch eine Mischeinrichtung (M) zwischen dem ersten und zweiten Absorber (A1, A2) wird der aus dem Verdampfer (V) bzw. dem ersten Absorber (A1) austretende Kältemitteldampf mit einem Teil der reichen Lösung aus dem zweiten Absorber (A2) gemischt. Die aus der Mischeinrichtung (M) austretende aufkonzentrierte Lösung wird nicht unmittelbar der zweiten Trennkolonne (TK2) als mittlerer Zulauf zugeführt, sondern wird der in dem ersten Absorber (A1) eintretenden armen Lösung aus dem ersten Generator (G1) zugemischt. Aus der aus dem ersten Absorber (A1) austretenden reichen Lösung wird dann der mittlere Zulauf für die zweite Trennkolonne (TK2) abgezweigt.

## Beschreibung

Die vorliegende Erfindung betrifft eine mehrstufige Absorptionswärmepumpe mit einem Arbeitsstoffpaar mit mehrkomponentiger Dampfphase gemäß dem Oberbegriff des Anspruchs 1.

Absorptionswärmepumpen mit dem Stoffpaar Ammoniak-Wasser sind beispielsweise aus dem Buch Altenkirch E., Absorptionskältemaschinen, 1954, VEB Verlag Technik, Berlin bekannt.

Einstufige Absorptionskältemaschinen bzw. -wärmepumpen umfassen einen Kondensator, einen Verdampfer, einen Absorber und einen Generator. Im Generator wird aus einem Gemisch des Arbeitsstoffpaars mit einem hohen Anteil des Kältemittels Kältemittel aus diesem Gemisch ausgetrieben. Der entstehende Kältemitteldampf wird im Kondensator bei niedriegerer Temperatur kondensiert, wobei Wärme frei wird. Das entstehende Kältemittelkondensat wird auf einen tieferen Druck entspannt und im Verdampfer unter Aufnahme von Wärme verdampft. Der im Verdampfer entstehende Kältemitteldampf wird im Absorber von der armen Lösung aus dem Generator absorbiert und die reiche Lösung wird mit einer Pumpe zurück in den Generator befördert. Wird als Arbeitsstoffpaar Ammoniak und Wasser verwendet, muß zwischen dem Generator und Kondensator eine Trennkolonne vorgesehen werden, da der im Generator erzeugte Dampf ein Gemisch aus Ammoniak und Wasser ist. In dieser Trennkolonne wird das im Generator erzeugte binäre Dampfgemisch aus Ammoniak und Wasser im Gegenstrom zu dem nahezu reinen Ammoniakkondensat aus dem Kondensator geführt. Dadurch wird erreicht, daß am Ende der Trennkolonne beim Kondensator nahezu reiner Ammoniakdampf ankommt. Das aus dem Kondensator austretende Kondensat wird in einem Vorkühler durch den kalten Ammoniakdampf aus dem Verdampfer gekühlt bevor es in dem Verdampfer eintritt. Um den Verdampfer von Wasser, das wegen der nicht vollständigen Rektifikation in der Trennkolonne vom Kondensator in den Verdampfer transportiert wird, zu befreien, wird ein kleiner Flüssigkeitsstrom vom Verdampfer durch den Vorkühler in den Absorber geführt (Bleed). Durch einen Lösungswärmetauscher wird die aus dem Generator austretende arme Lösung gekühlt und damit die in den Generator eintretende reiche Lösung vorgewärmt.

Mit einer derartigen einstufigen Absorptionswärmepumpe bzw. Kältemaschine lassen sich je nach Temperaturhub (Temperaturdifferenz zwischen Verdampfer und Kondensator) Wärmeverhältnisse (Verdampferwärme zu Antriebswärme) von etwa 0,55 (Temperaturhub 40 - 45 K) bis 0,28 (Temperaturhub von 85 K) erreichen.

Mit mehrstufigen Kältemaschinen bzw. Wärmepumpen, wie sie beispielsweise in dem Buch Alefeld G., Rademacher R. "Heat Conversion Systems", 1994, CRC press, Boca Raton, Florida allgemein erläutert sind, lassen sich die Wärmeverhältnisse von einstufigen Absorptionswärmepumpen verbessern bzw. der Temperaturhub vergrößern. Bei zweistufigen Absorptionswärmepumpen werden zwei Kreisläufe jeweils mit Kondensator, Verdampfer, Absorber und Generator miteinander gekoppelt.

Bei der zweistufigen Triple-Effect-Schaltung wird in den zwei Kreisläufen ein gemeinsamer Verdampfer verwendet, der gemeinsame Verdampfer und die beiden Absorber arbeiten auf einem unteren Druckniveau, der Kondensator und der Generator des ersten Kreislaufs auf einem mittleren Druckniveau und der Kondensator und Generator des zweiten Kreislaufs auf einem oberen Druckniveau. Die im Kondensator und Absorber des zweiten Kreislaufs frei werdende Wärme wird in den Generator des ersten Kreislaufs eingekoppelt, so daß sich mit dieser Schaltung theoretisch ein Wärmeverhältnis von drei erreichen läßt.

Bei der zweistufigen Double-Effect-Schaltung wird in den zwei Kreisläufen ebenfalls ein gemeinsamer Verdampfer und zusätzlich ein gemeinsamer Kondensator verwendet, der gemeinsame Verdampfer und die beiden Absorber arbeiten auf einem unteren Druckniveau, der gemeinsame Kondensator und die beiden Generatoren arbeiten auf einem oberen Druckniveau. Mit der Double-Effect-Schaltung läßt sich theoretisch ein Wärmeverhältnis von zwei erreichen.

Ein Nachteil von zwei- bzw. mehrstufigen Absorptionskältemaschinen, die Arbeitsstoffpaare mit mehrkomponenentiger Dampfphase verwenden besteht darin, daß der notwendige Energieaufwand für die Rektifikation die Verbesserung des Wärmeverhältnisses durch die Mehrstufigkeit wieder zunichte macht.

Eine Wärmepumpe mit einer Trenn- und einer Mischkolonne, wobei aus der Mitte der Mischkolonne ein Zulauf zur Trennkolonne abgezweigt wird, ist aus dem US-Patent 2,667,764 bekannt.

Ausgehend von einer Double- oder Triple-Effect-Absorptionswärmepumpe mit einem Arbeitsstoffpaar, das eine Rektifikation erforderlich macht, ist es Aufgabe der vorliegenden Erfindung eine Absorptionswärmepumpe bzw. eine Absorptionskältemaschine anzugeben, die ein verbessertes Wärmeverhältnis aufweist.

Die Lösung dieser Aufgabe erfolgt durch die Merkmale des Anspruchs 1.

Durch eine Mischeinrichtung zwischen dem ersten und zweiten Absorber wird der aus dem Verdampfer bzw. dem ersten Absorber austretende Kältemitteldampf mit einem Teil der reichen Lösung aus dem zweiten Absorber gemischt. Aufgrund der Konzentrationsunterschiede zwischen dem Kältemitteldampf und der reichen Lösung wird die reiche Lösung aus dem zweiten Absorber noch stärker mit Kältemittel angereichert. Die aus der Mischeinrichtung austretende aufkonzentrierte Lösung wird nicht unmittelbar der zweiten Trennkolonne als mittlerer Zulauf zugeführt, sondern wird der in den ersten Absorber eintretenden armen Lösung aus dem ersten Generator zugemischt. Im ersten Absorber wird das in den ersten Absorber eintretende Lösungsgemisch noch mehr mit Kältemittel angereichert. Aus dieser aus dem ersten Absorber austretenden reichen Lösung wird ein Teilstrom abgezweigt und der zweiten Trennkolonne als weiterer Zulauf zugeführt. Die aus der Mischeinrichtung austretende Lösung weist eine geringere Kältemittelkonzentration auf als die in den ersten Absorber eintretende arme Lösung aus dem ersten Generator. Es erscheint daher auf den ersten Blick nicht sehr sinnvoll, die Lösungen unterschiedlicher Konzentration zu mischen, da hierbei Mischungsirreversibilitäten auftreten. Diese Mischungsirreversibilitäten werden jedoch bewußt in Kauf genommen, da sich gezeigt hat, daß der dadurch aus dem ersten Absorber abzweigbare weitere Zulauf für die zweiten Trennkolonne mit größerer Kältemittelkonzentration diese Mischungsirreversibilitäten mehr als ausgleicht. In Summe führt dies zu einer Verringerung der Irreversibilitäten und damit zu einer Verbesserung des Wärmeverhältnisses.

Gemäß einer vorteilhaften Ausgestaltung der Erfindung wird die aus der ersten Flüssigkeitsleitung für reiche Lösung abgezweigte reiche Lösung zunächst der ersten Trennkolonne zugeführt. Falls der erste Generator und die zweite Trennkolonne auf gleichem Druckniveau liegen, läßt sich der Überschuß an reicher Lösung im ersten Generator durch einen einfachen Überlauf im ersten Generator der zweiten Trennkolonne zuführen. Falls der erste Generator und die zweite Trennkolonne auf unterschiedlichen Druckniveaus liegen, ist lediglich eine zusätzliche Flüssigkeitsleitung zwischen der ersten und der zweiten Trennkolonne notwendig. (Anspruch 2) Gemäß einer alternativen Ausführungsform der Erfindung wird die der zweiten Trennkolonne zugeführte reiche Lösung unmittelbar nach dem Austritt aus dem ersten Absorber abgezweigt, wobei jedoch zwischen dieser abgezweigten Losung und der ersten Trennkolonne ein innerer Wärmetausch ausgeführt wird. Dies hat in vorteilhafter Weise zur Folge, daß wenigstens ein Teil der Rektifikationswärme aus der ersten Trennkolonne zurückgewonnen und die abgezweigte Lösung vorgewärmt wird. (Anspruch 3)

Gemäß einer weiteren vorteilhaften Ausgestaltung der Erfindung wird der in der ersten Trennkolonne vorliegende Uberschuß an reicher Lösung unter Umgehung des ersten Generators über eine entsprechende Flüssigkeitsleitung direkt der zweiten Trennkolonne zugeführt. Dadurch lassen sich in vorteilhafter Weise die erste und zweite Trennkolonne in einem Bauteil unterbringen, während der erste Generator neben der ersten und zweiten Trennkolonne angeordnet werden kann. Dies führt zu einer um die Bauhöhe des ersten Generators reduzierten Bauhöhe der erfindungsgemäßen Absorptionswärmepumpe. Der Übergang von Lösung aus der ersten zur zweiten Trennkolonne über die Flüssigkeitsleitung oder der Zulauf der Lösung aus der ersten Trennkolonne in den ersten Generator läßt sich auf einfache Weise durch ein Ventil steuern, das über einen Schwimmer im ersten Generator geöffnet oder geschlossen wird. (Anspruch 4)

Gemäß einer weiteren vorteilhaften Ausgestaltung der Erfindung wird die Mischeinrichtung gekühlt, wodurch eine höhere Konzentration der aus der Mischeinrichtung in den ersten Absorber eintretenden reichen Lösung erreicht wird und sich somit kleinere Mischungsverluste ergeben. (Anspruch 5)

In vorteilhafter Weise wird diese Kühlung durch einen inneren Wärmetausch zwischen der Mischeinrichtung und wenigstens einem Teil der aus dem ersten Absorber austretenden reichen Lösung erreicht. (Anspruch 6)

Gemäß einer weiteren vorteilhaften Ausgestaltung der Erfindung liegen der erste Kondensator und der erste Generator auf dem gleichen Druckniveau, wobei dieses Druckniveau kleiner ist als das Druckniveau des zweiten Kondensators und des zweiten Generators. Auf diese Weise wird eine zweistufige Absorptionswärmepumpe geschaffen, bei der je nach Wahl des Druckes im zweiten Kondensator und der Kältemittelkonzentrationen der reichen und armen Lösung zwischen dem zweiten Generator und dem zweiten Absorber, die Wärmen aus dem zweiten Kondensator und/oder dem zweiten Absorber wenigstens teilweise in den ersten Generator eingekoppelt werden können. (Anspruch 9)

Gemäß einer weiteren vorteilhaften Ausgestaltung der Erfindung ist die zweistufige Absorptionswärmepumpe als Triple-Effect-Absorptionswärmepumpe ausgebildet, wobei die im zweiten Kondensator und im zweiten Absorber frei werdende Wärme in den ersten Generator eingekoppelt wird. (Anspruch 10)

Gemäß einer weiteren vorteilhaften Ausgestaltung der Erfindung wird zwischen dem aus dem zweiten Kondensator austretenden Kondensat und dem über die dritte Flüssigkeitsleitung der zweiten Trennkolonne zugeführten reichen Lösung ein innerer Wärmetausch ausgeführt. Dadurch wird das Kondensat vorgekühlt und die in die zweite Trennkolonne eingeleitete reiche Lösung wird vorgewärmt (Anspruch 11).

Weitere Einzelheiten, Merkmale und Vorteile der Erfindung ergeben sich aus der nachfolgenden Beschreibung bevorzugter Ausführungsformen anhand der Zeichnung.

Es zeigt:
- Fig. 1: eine beispielhafte Ausführungsform der Erfindung in Form einer Double-Effect-Absorptionswärmepumpe,
- Fig. 2 bis 4: zeigen Modifikationen der Double-Effect-Schaltung nach Fig. 1,
- Fig. 5: eine beispielhafte Ausführungsform der Erfindung in Form einer Triple-Effect-Absorptionswärmepumpe, und
- Fig. 6 und 7: zeigen Modifikationen der Triple-Effect-Absorptionswärmepumpe gemäß Fig. 5.

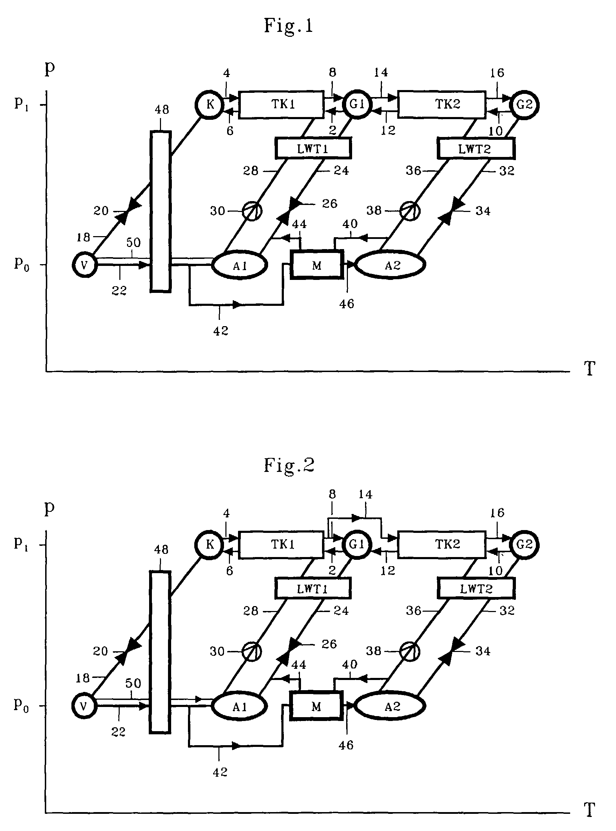

Die in Fig. 1 dargestellte Double-Effect-Absorptionswärmepumpe arbeitet zwischen zwei Druckniveaus einem oberen Druckniveau p1 und einem unteren Druckniveau p0 und umfaßt einen gemeinsamen Verdampfer V und einen gemeinsamen Kondensator K sowie einen ersten und einen zweiten Generator G1 und G2 mit einem ersten und zweiten Absorber A1 und A2. Als Arbeitsstoffpaar wird beispielsweise eine Ammoniak/Wasser-Lösung verwendet, die ein binäres Dampfgemisch bildet. Um im Kondensator K möglichst reines Kältemittel, d. h. Ammoniak vorliegen zu haben ist zwischen dem gemeinsamen Kondensator K und dem ersten Generator G1 eine erste Trennkolonne TK1 und zwischen dem ersten Generator G1 und dem zweiten Generator G2 eine zweite Trennkolonne TK2 angeordnet. Über eine Dampfleitung 2 wird der ersten Trennkolonne TK1 im ersten Generator G1 erzeugter Mischdampf zugeführt. Dieser Mischdampf wird im Gegenstrom zu Kondensat geführt, das über eine Leitung 4 aus dem im Kondensator K abgezweigt und der Trennkolonne TK1 zugeführt wird. In der Trennkolonne TK1 wird dem Dampfgemisch Wasserdampf entzogen, so daß über die Dampfleitung 6 nahezu reiner Ammoniakdampf in den Kondensator K eingeführt wird. Über eine Leitung 8 wird die in der Trennkolonne TK1 entstehende Ammoniak-Wasserlösung dem ersten Generator G1 zugeführt.

In gleicher Weise wird über eine Leitung 10 der zweiten Trennkolonne TK2 ein Ammoniak-Wasser-Dampfgemisch zugeführt und über eine Leitung 12 dem ersten Generator G1 und über die Leitung 2 der Trennkolonne TK1 und über die Leitung 6 dem Kondensator K zugeführt. Im Gegenstrom wird hierzu über eine Leitung 14 arme Lösung aus dem ersten Generator G1 der zweiten Trennkolonne TK2 zugeführt und das in der zweiten Trennkolonne TK2 entstehende Ammoniak-Wasser-Gemisch wird über eine Leitung 16 aus der Trennkolonne TK2 abgezogen und dem zweiten Generator G2 zugeführt. Der nicht in die erste Trennkolonne TK1 zurückgeführte Anteil des Ammoniak-Kondensats wird über eine Kondensatleitung 18 und eine Drossel 20 dem Verdampfer V zugeführt. Durch Aufnahme von Wärme bzw. durch "Erzeugung von Kälte" im Verdampfer V wird Ammoniak dann erzeugt, der über eine Dampfleitung 22 dem ersten Absorber A1 zugeführt wird. Dem ersten Absorber A1 wird über eine Leitung 24 und eine Drossel 26 arme Lösung aus dem ersten Generator zugeführt. Über eine Leitung 28 wird die im ersten Absorber erzeugte reiche Lösung mittels einer Pumpe 30 der ersten Trennkolonne TK1 zugeführt. In gleicher Weise wird dem zweiten Absorber über eine Leitung 32 und eine Drossel 34 arme Lösung aus dem zweiten Generator G2 zugeführt und in dem zweiten Absorber A2 erzeugte reiche Lösung wird über eine Leitung 36 und eine Pumpe 38 der zweiten Trennkolonne TK2 zugeführt.

Zwischen dem ersten Absorber A1 und dem zweiten Absorber A2 ist eine Mischeinrichtung in Form einer Mischkolonne M angeordnet. Die Mischkolonne M ist über eine Leitung 40, die von der Leitung 36 abzweigt, reiche Lösung aus dem zweiten Absorber A2 zugeführt wird. Diese reiche Lösung wird in der Mischkolonne M mit Ammoniakdampf aus dem Verdampfer V, der über eine Leitung 42 zugeführt wird, im Gegenstrom geführt. Aufgrund der Konzentrationsunterschiede wird die Lösung mit Ammoniak und der Dampf mit Wasser angereichert. Diese mit Ammoniak angereicherte Lösung wird über eine Leitung 44 der ersten Flüssigkeitsleitung 24 für arme Lösung zugespeist und damit der in dem ersten Absorber A1 eintretenden armen Lösung zugemischt. Der mit Wasser angereicherte Ammoniakdampf tritt aus der Mischkolonne M über eine Leitung 46 in den zweiten Absorber A2 ein.

Über Lösungswärmetauscher LWT1 und LWT2 wird in den beiden Lösungskreisläufen zwischen erstem Generator G1 und erstem Absorber A1 und zweitem Generator G2 und zweitem Absorber A2 ein innerer Wärmetausch durchgeführt. Über einen Vorkühler 48 wird das aus dem Kondensator K austretende Kondensat durch den aus dem Verdampfer V austretenden Ammoniakdampf gekühlt. Über eine Leitung 50 zwischen dem Verdampfer V und dem ersten Absorber A1 wird aus dem Kondensator K in dem Verdampfer V verschlepptes Wasser durch den Vorkühler 48 in den ersten Absorber A1 geführt, so daß sich kein Wasser im Verdampfer V anreichern kann. Zwischen dem ersten und dem zweiten Absorber A1 und A2 erübrigt sich durch die Anordnung der Mischkolonne M das Vorsehen einer der Leitung 50 entsprechenden Bleed-Leitung.

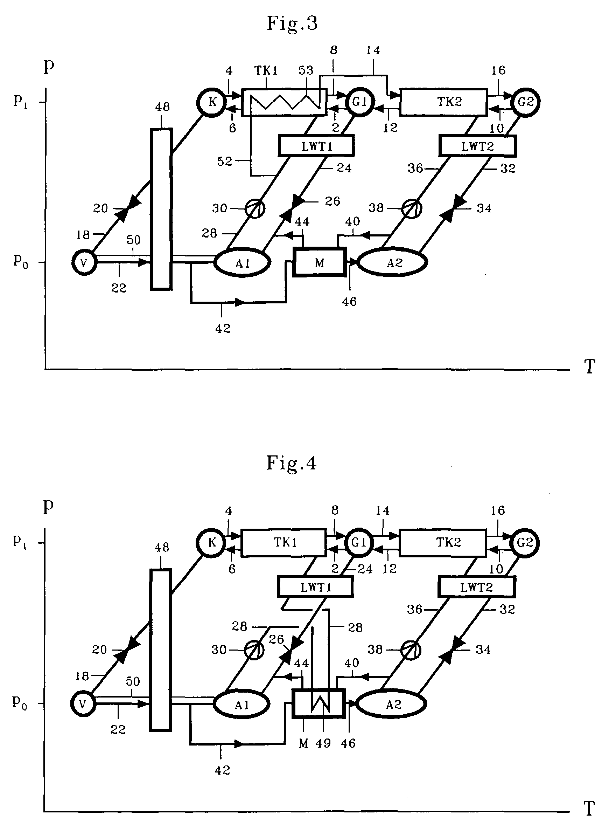

Die Ausführungsformen gemäß den Figuren 2 bis 4 stellen Modifikationen der Ausführungsform nach Fig. 1 dar und es wird in der folgenden Beschreibung lediglich auf die Unterschiede zu der Ausführungsform nach Fig. 1 eingegangen.

Die Ausführungsform der Erfindung nach Fig. 2 unterscheidet sich von der Ausführungsform nach Fig. 1 dadurch, daß der Zulauf 14 zur zweiten Trennkolonne TK2 nicht aus dem ersten Generator G1 heraus geführt wird, sondern von der Leitung 8 aus der ersten Trennkolonne TK1 direkt abzweigt. Dadurch ist eine Reduzierung der Bauhöhe möglich, da der erste Generator G1 neben der ersten und zweiten Trennkolonne TK1 und TK2 angeordnet werden kann und sich die erste und zweite Trennkolonne TK1 und TK2 unmittelbar über- bzw. untereinander in einem Bauteil anordnen lassen.

Bei der Ausführungsform gemäß Fig. 3 zweigt eine Leitung 52 nach der Pumpe 30 und vor dem ersten Lösungswärmetauscher LWT1 von der Leitung 28 ab und wird einem Wärmetauscher 53 in der ersten Trennkolonne TK1 eingangsseitig zugeführt. Ausgangsseitig ist der Wärmetauscher 53 über die Leitung 14 mit der zweiten Trennkolonne TK2 verbunden. Damit wird die aus der ersten Flüssigkeitsleitung 28 für reiche Lösung abgezweigte Lösung durch inneren Wärmetausch mittels dem Wärmetauscher 53 in der ersten Trennkolonne TK1 vorgewärmt, bevor die reiche Lösung über die Leitung 14 der zweiten Trennkolonne zugeführt wird. Außerdem ermöglicht dies eine deutliche Reduzierung der Bauhöhe, da der erste Generator G1 und die erste und zweite Trennkolonne TK1 und TK2 nebeneinander angeordnet werden können.

Die Ausführungsform gemäß Fig. 4 unterscheidet sich von der Ausführungsform gemäß Fig. 1 lediglich dadurch, daß die erste Flüssigkeitsleitung 28 für reiche Lösung vor Eintritt in den ersten Lösungswärmetauscher LWT1 durch einen Wärmetauscher 49 in der Mischkolonne M geführt wird, wodurch die Mischkolonne M gekühlt und die reiche Lösung vorgewärmt wird. Alternativ läßt sich diese Kühlung der Mischkolonne M auch nur mit einem Teil der reichen Lösung in der ersten Flüssigkeitsleitung 28 durchführen.

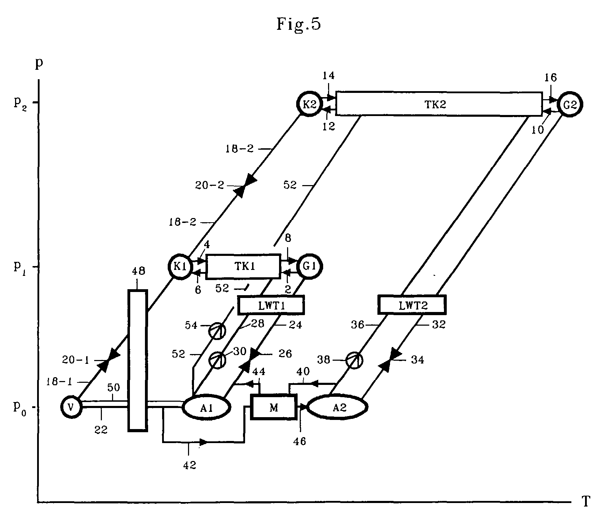

Fig. 5 zeigt eine weitere Ausführungsform der Erfindung in Form einer Triple-Effect-Absorptionswärmepumpe, die zwischen drei Druckerniveaus P0, P1 und P2 arbeitet und in Abweichung von der Ausführungsform gemäß Fig. 1 einen ersten und einen zweiten Kondensator K1 und K2 aufweist, wobei der Kondensator K2 auf dem oberen Druckniveau P2 und der Kondensator K1 auf dem unteren Druckniveau P1 arbeitet. D. h., der Kondensator K2 und der Generator G2 liegen auf dem oberen Druckniveau P2, der Kondensator K1 und der Generator G1 auf dem mittleren Druckniveau P1 und der gemeinsame Verdampfer V sowie der erste und zweite Absorber A1 und A2 liegen auf dem unteren Druckniveau P0. Der erste und zweite Kondensator K1 und K2 sind miteinander mit einer Flüssigkeitsleitung 18-2, in der eine Drossel 20-2 angeordnet ist, verbunden. Ebenso sind der gemeinsame Verdampfer V und der erste Kondensator K1 über eine Flüssigkeitsleitung 18-1 miteinander verbunden, in der eine Drossel 20-1 angeordnet ist. Die zweite Trennkolonne TK2 ist über die Leitungen 14 und 12 dem zweiten Kondensator K2 und nicht - wie in Fig. 1 - mit dem ersten Generator G1 verbunden. Die übrigen Leitungen, Pumpen und Drosseln stimmen mit denen der Ausführungsform nach Fig. 1 überein. Im Unterschied zu der Ausführungsform nach Fig. 1 ist jedoch eine zusätzliche Flüssigkeitsleitung 52 mit einer Pumpe 54 vorhanden, über die aus dem ersten Absorber A1 abgezweigte reiche Lösung direkt der zweiten Trennkolonne TK2 zugeführt wird. Hierbei kann die Flüssigkeitsleitung 52 so durch die erste Trennkolonne TK1 geführt werden, daß ein innerer Wärmetausch zwischen Flüssigkeitsleitung 52 und Trennkolonne TK1 stattfindet.

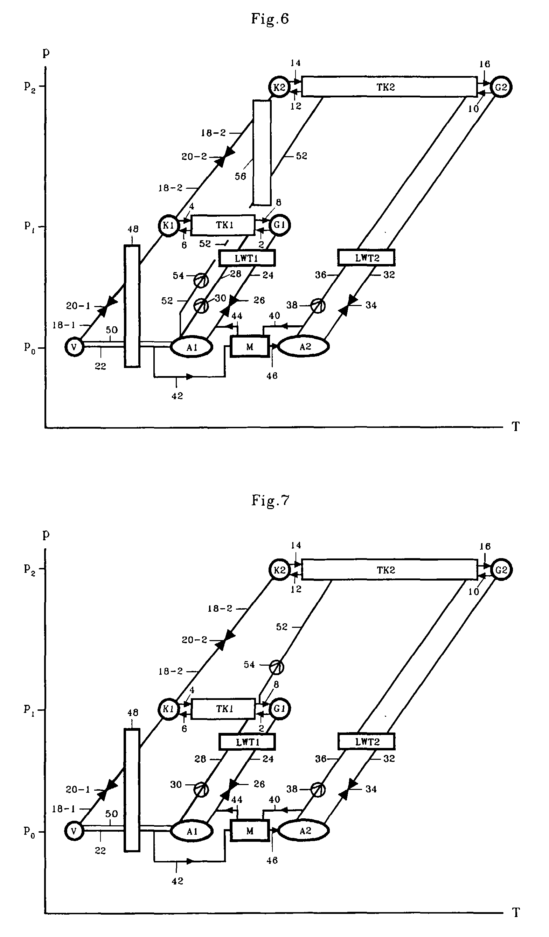

Die Ausführungsformen gemäß den Fig. 6 und 7 stellen Modifikationen der Ausführungsform nach Fig. 5 dar und es wird daher bei der Beschreibung der Ausführungsformen nach Fig. 6 und 7 lediglich auf die Unterschiede zu der Ausführungsform nach Fig. 5 eingegangen.

Die Ausführungsform nach Fig. 6 weist zusätzlich einen Wärmetauscher 56 auf, mittels dem die über die Leitung 52 der zweiten Trennkolonne TK2 zugeführte reiche Lösung durch das aus dem zweiten Kondensator K2 über die Leitung 18-2 herausgeführte Kondensat vorgewärmt wird.

Bei der Ausführungsform nach Fig. 7 wird die Flüssigkeitsleitung 52 von der Leitung 8 zwischen der ersten Trennkolonne TK1 und dem ersten Generator G1 abgezweigt, so daß in der ersten Trennkolonne TK1 ein Wärme- und Stoffaustausch stattfindet.

Nachfolgend sind beispielhafte Betriebsdaten für die Triple-Effect-Absorptionswärmepumpe und die Double-EffectAbsorptionswärmepumpe gemäß den Fig. 1 bis 7 angegeben:

| Interne Temperaturen am Ausgang von: | Triple-Effect-Schaltung, Fig. 2 | Double-Effect Schaltung, Fig. 1 |
|---|---|---|
| Verdampfer | 10°C | 10°C |
| Absorber 1 | 42°C | 42°C |
| Kondensator 1 | 42°C | 42°C |
| Generator 1 | 97°C | 97°C |
| Absorber 2 | 100°C | 100°C |
| Kondensator 2 | 96°C | 42°C |
| Generator 2 | 253°C | 175°C |

| Drücke: | | |
|---|---|---|
| Verdampfer | 0.5 MPa | 0.5 MPa |
| Kondensator 1 | 1.6 MPa | 1.6 MPa |
| Kondensator 2 | 5.7 MPa | 1.6 MPa |

| Konzentrationen: | | |
|---|---|---|
| Kondensator 1/2 | 99 % | 99 % |
| Verdampfer Ausgang | 82 % | 82 % |
| Absorber 1/Generator 1 | 49 % reich; 43 % arm | 49 % reich; 43 % arm |
| Absorber 2/Generator 2 | 20 % reich; 10 % arm | 20 % reich; 10 % arm |

| Wärmeverhältnis: | | |
|---|---|---|
| (Kühlleistung/Antriebsleistung) | 1.3 | 1.0 |

## Patentansprüche

1. Mehrstufige Absorptionswärmepumpe mit
einem ersten Absorberkreislauf, der einen ersten Verdampfer (V), einen ersten Absorber (A1), einen ersten Generator (G1), einen ersten Kondensator (K1) und eine erste Trennkolonne (TK1) zwischen erstem Kondensator (K1) und erstem Generator (G1) aufweist,
einem zweiten Absorberkreislauf, der einen zweiten Verdampfer (V), einen zweiten Absorber (A2), einen zweiten Generator (G2), einen zweiten Kondensator (K2) und eine zweite Trennkolonne (TK2) zwischen zweitem Kondensator (K2) und zweitem Generator (G2) aufweist,
einem gemeinsamen Arbeitsstoffpaar mit Kältemittel und Absorptionsmittel in beiden Absorberkreisläufen mit mehrkomponentiger Dampfphase,
einer ersten Leitung (24) für Lösung mit geringer Kältemittelkonzentration (arme Lösung) und einer ersten Leitung (28) für Lösung mit hoher Kältemittelkonzentration (reiche Lösung) zwischen erstem Absorber (A1) und erstem Generator (G1),
einer zweiten Leitung (32) für Lösung mit geringer Kältemittelkonzentration (arme Lösung) und einer zweiten Leitung (36) für Lösung mit hoher Kältemittelkonzentration (reiche Lösung) zwischen zweitem Absorber (A2) und zweitem Generator (G2),
**dadurch gekennzeichnet,**
daß zwischen dem ersten und zweiten Absorber (A1, A2) eine Mischeinrichtung (M) angeordnet ist, die mittels einer Dampfleitung (42) mit wenigstens einem der Verdampfer (V) und/oder dem ersten Absorber (A1) und mittels einer Dampfleitung (46) mit dem zweiten Absorber (A2) und mittels einer Flüssigkeitsleitung (40) mit der zweiten Leitung (36) für reiche Lösung aus dem zweiten Absorber (A2) und mittels einer Flüssigkeitsleitung (44) mit der ersten Leitung (24) für arme Lösung zu dem ersten Absorber (A1) verbunden ist, und
daß reiche Lösung aus der ersten Flüssigkeitsleitung (28) für reiche Lösung der zweiten Trennkolonne (TK2) zuführbar ist.

2. Absorptionswärmepumpe nach Anspruch 1, dadurch gekennzeichnet, daß die aus der ersten Flüssigkeitsleitung (28) für reiche Lösung abgezweigte reiche Lösung zunächst der ersten Trennkolonne (TK1) und über den ersten Generator (G1) der zweiten Trennkolonne (TK2) zugeführt wird.

3. Absorptionswärmepumpe nach Anspruch 1, gekennzeichnet durch eine Wärmetauschereinrichtung (53) zum Wärmeaustausch zwischen der ersten Trennkolonne (TK1) und der aus der ersten Flüssigkeitsleitung (28) für reiche Lösung abgezweigten reichen Lösung.

4. Absorptionswärmepumpe nach Anspruch 2, dadurch gekennzeichnet, daß die der ersten Trennkolonne (TK1) zugeführte, aus der ersten Flüssigkeitsleitung (28) für reiche Lösung abgezweigte reiche Lösung über eine Flüssigkeitsleitung (14; 52) zwischen erster und zweiter Trennkolonne direkt der zweiten Trennkolonne (TK2) zuführbar ist.

5. Absorptionswärmepumpe nach wenigstens einem der vorhergehenden Ansprüche, dadurch gekennzeichnet, daß die Mischeinrichtung (M) gekühlt ist.

6. Absorptionswärmepumpe nach Anspruch 5, dadurch gekennzeichnet, gekennzeichnet durch eine Wärmetarnschereinrichtung (49) zum Wärmetausch zwischen der Mischereinrichtung (M) und der ersten Leitung (28) für reiche Lösung.

7. Absorptionswärmepumpe nach wenigstens einem der vorhergehenden Ansprüche, dadurch gekennzeichnet, daß der erste und zweite Verdampfer als gemeinsamer Verdampfer (V) ausgebildet ist.

8. Absorptionswärmepumpe nach Anspruch 7, dadurch gekennzeichnet, daß der erste und der zweite Kondensator als gemeinsamer Kondensator (K) und die Absorptionswärmepumpe als Double-Effect-Absorptionswärmepumpe ausgebildet ist.

9. Absorptionswärmepumpe nach Anspruch 7, dadurch gekennzeichnet, daß der erste Kondensator (K1) und der erste Generator (G1) auf einem Druckniveau (P1) liegen, das kleiner ist als das Druckniveau (P2) des zweiten Kondensators (K2) und des zweiten Generators (G2) und daß die aus der ersten Flüssigkeitsleitung (28) für reiche Lösung abgezweigte reiche Lösung über eine dritte Flüssigkeitsleitung (52) der zweiten Trennkolonne (TK2) zugeführt ist.

10. Absorptionswärmepumpe nach Anspruch 9, dadurch gekennzeichnet, daß die Absorptionswärmepumpe als Tripple-Effect-Absorptionswärmepumpe ausgebildet ist und daß die im zweiten Kondensator (K2) und im zweiten Absorber (A2) frei werdende Wärme dem ersten Generator (G1) zuführbar ist.

11. Absorptionswärmepumpe nach Anspruch 9 oder 10, gekennzeichnet durch eine Wärmetauschereinrichtung (56) zwischen der Kondensatleitung (18-2) aus dem zweitem Kondensator (K2) und der dritten Flüssigkeitsleitung (52) für reiche Lösung.
